# EUROPEAN PATENT SPECIFICATION

(11) **EP 0 743 591 B1**
(45) Date of publication and mention of the grant of the patent: **02.01.2002**
(21) Application number: 95201278.9
(22) Date of filing: 16.05.1995
(51) Int. Cl.: G06F 3/12

(54) **Printing system comprising a communication control apparatus**
Druckersystem, das ein Kommunikationssteuerungsgerät beinhaltet
Système d'impression ayant un dispositif de commande de communication

(43) Date of publication of application: 20.11.1996
(73) Proprietor: Océ-Technologies B.V., 5914 CC Venlo (NL)
(72) Inventor: van Kuringen, Hendricus Maria Johannes Cornelis, 5665 GB Geldrop (NL)
(74) Representative: Hanneman, Henri W., Dr.

(56) References cited:
- EP-A- 0 509 524
- EP-A- 0 598 511
- XEROX DISCLOSURE JOURNAL, vol.13, no.5, September 1988, STAMFORD, CONN US pages 279 - 280 B.C.BARLOW AND D.J.SMERESKI 'LOW COST PRINTER SHARING MECHANISM-DNET'

## Description

The invention relates to a communication control apparatus for controlling communication between an equipment apparatus connectable to a first network and an external station through a second network. More particularly, the equipment apparatus is preferably a printing apparatus and the communication control apparatus is used together with such a printing apparatus in a printing system.

In conventional copying apparatuses it has been commonly known to perform a so called remote maintenance. This implies that the service station calls up the copying apparatus via a modem installed with the copying machine and collects operation related data directly from the copying machine. Such data inlcudes eg the number of copies made since the last service, status of different parts, jam occurence, toner replenishment etc. In this way it is possible for the service station to provide accurate service in time and also to check whether any errors occur too often. A remote maintenance of this kind is eg disclosed in document EP-A-0 509 528. In this document a communication control apparatus is connected to a copier in order to control the communication with the remote host computer. The communication is controlled so that a data transfer via a modem can only take place when the copier is not copying a document in order to not disturb copying operation. When installing a modem connected to the copying machine the customer may want to ensure that only the service station has access to the copier. Two main solutions have been proposed in the prior art, ie the provision of a password as eg disclosed in document JP-A-02 237356 and the call back technique as eg disclosed in EP-A-0 513 549.

However, in the case of equipment apparatuses connected to a network, eg an internal network for transmitting data, a data security problem occurs when a modem is to be installed. This is eg the case with printers, plotters or copiers with a print option which are connected to a network, such as eg an internal network over which the print data is provided. Patent application EP-A-0 598 511 describes such a configuration in which a printer is connected to a network as well as to other sources via a seperate interface. Thus, by connecting a modem to a printer which is connected to an internal network, the customer may be worried that confidential data could leak out to the public. In such a case the provision of a password is not considered enough, since it is well known that such passwords may be cracked by an unauthorised person. Thus, there is a need for a reliable data security measure in this field.

It is an object of the present invention to provide a reliable data security which is easy to check for the operator. This object is solved by providing a communication control apparatus comprising internal communication means for communicating with an equipment apparatus connectable to a first network, external communication means for communicating with an external station through a second network and control means for allowing the external communication means to communicate with the external station only when the equipment apparatus is not functionally connected to the first network.

Preferably, it is an object of the present invention to provide a printing system comprising:
- a printing apparatus connectable to a first network for receiving print data therethrough; and
- a communication control apparatus connected to the printing apparatus, comprising:
   - external communication means for communicating with an external station through a second network; and
   - internal communication means for communicating with the printing apparatus; wherein the communication control apparatus further comprises
      - control means for allowing the external communication means to communicate with the external station only when the printing apparatus is not functionally connected to the first network.

In a second preferred embodiment of the present invention the communication control apparatus further comprises
- operator operable switch means for outputting a signal indicating whether a priority status has been switched on; and
- control means connected to the switch means, said control means allowing communication with the external station when the priority status has been switched on or in the case that the priority status is switched off only when the printing apparatus is not functionally connected to the first network.

Preferred embodiment external communication is only allowed when the equipment apparatus is shut off.

This second embodiment is preferred when an on-line diagnostic has to take place.

It is a further object of the present invention to provide a printer communication control apparatus for use in a printing system.

### Brief description of the drawings

Fig. 1 is a schematic diagram showing the infrastructure of an equipment apparatus;
Fig. 2 is a schematic structural diagram showing a communication control apparatus according to the present invention; and
Fig. 3 is an example of a communication control apparatus according to a preferred embodiment.

### Detailed description of preferred embodiments

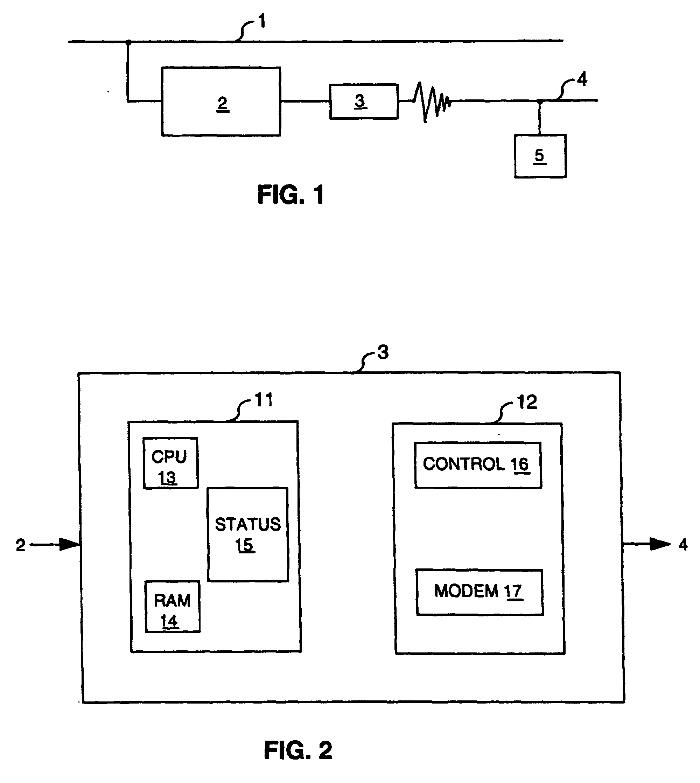

With reference to Fig. 1 a typical infrastructure will be explained. An equipment apparatus 2, eg a printer, is connected to a first network 1 such as an internal network. It should be noted that the first network is not necessarily an internal network in the sense of an in-house network, but may be any kind of network through which data is provided to the equipment apparatus. The internal network supplies the printer with printer data from eg individual work stations. This is an infrastructure which is commonly used in offices today. In order to provide an adequate service, the service station - normally an external firm - would like to be able to get status data from the printer via a second network, such as the public telephone line. This is referred to as remote maintenance. For this purpose a communication control apparatus 3 comprising a telephone modem is connected to the printer. In this way the external service station 5 may call up the printer via the public telephone line 4 and read out the status data automatically. However, as is well known to the public not only may the service station call the printer via the telephone line but also an unauthorised person may do so. This results in the customer being anxious that an unauthorised person could get access - via the printer - to the internal network and to possible confidential data. Thus, the customer may refuse the service station to install a modem on the grounds of data security.

A schematic diagram of a communication control apparatus 3 in accordance with the invention is shown in Fig. 2. The apparatus consists of two parts; ie the internal part 11 for communication with the printer 2 and the external part 12 for communication with the external service station. When the printer 2 is switched on the central processing unit (CPU) 13 of the internal part 11 of the communication control apparatus 3 automatically reads the required operation related data from the printer 3 at regular intervals. Such operation related data may consist of number of prints made since last service, toner replenishment, status of the printer parts, error messages, jam occurences etc., but also data for market analysis such as job structures. The data are then stored in a memory 14. The data read out are updated eg every hour to provide the service station with the latest data on request. The internal part 11 further comprises status sensing means 15 for sensing a status of the printer 2. The status sensing means 15 senses whether the printer 2 is connected to the internal network 1 or not. In a preferred embodiment the sensing means 15 senses whether the printer 2 is shut on or off. In another embodiment the control means are automaticaly activated to allow external communication when the printer is shut off. If the printer 2 is shut off then the printer 2 is of course disconnected from the internal network 1. This is easy for the operator to check, since he only has to switch the printer off in the evening and then the service station may call the communication control apparatus 3 in the night and get the data relating to the printer 2. Of course other solutions are possible, the operator may actively disconnect the printer 2 from the internal network 1 by pulling the plug or an extra switch may be provided for functionally connecting/disconnecting the internal network. The sensing means 15 would then sense whether the connection has been functionally broken or would be automatically activated when the connection has been functionally broken.

The external part 12 of the communication control apparatus 3 consists mainly of a standard telephone modem 17 to manage the telephone connection and a control means 16 for deciding whether a connection is allowed or not. The control means 16 will only allow an external communication if the status sensing means 15 has sensed that the printer 2 is functionally disconnected from the internal network 1. Thus, the customer can be sure that there is no possibility of data leakage from the internal network 1 through the printer 2 and the communication control apparatus 3 to an unauthorised person. The only data that can be read out are the operation related data stored in the memory 14. Since external communication is only allowed when the printer is shut down or otherwise functionally disconnected from the internal network, there is no possibility of getting acces to the internal network via the communication control apparatus.

The service station normally automatically calls the printer up every night to get the stored data. If however, a request for data from the service station has not been received within a predetermined time, the communication control apparatus will store the data relating to this predetermined time in a separate memory. A plurality of such separate memories may be provided so that eg the data for a whole week may be stored in the case that no request has been received.

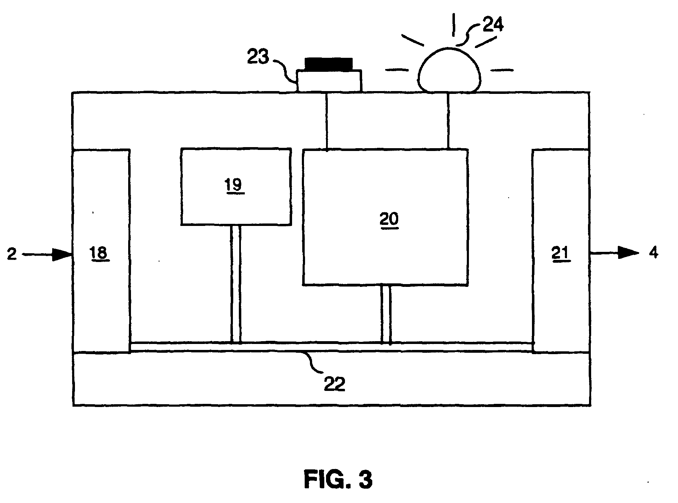

Figure 3 shows an example of a communication control apparatus 3 according to a preferred embodiment. The apparatus includes a standard telephone modem 21 which is utilised for the external communication. The modem 21 is controlled by a microcontroller 20 connected to the modem over a bus structure 22. The microcontroller performs the tasks of the control means 16 described above. The microcontroller 20 also controls the internal comunication with the equipment or printing apparatus via a standard communication interface means 18. Storage means 19, which may include a plurality of separate memories as described above, are provided to store the data read out from the printing apparatus and other data needed.

In the case that there occurs an error on the printer and the operator calls the service station, the service station may want to get status data from the printer in real time, ie while it is printing. In such a case the communication control apparatus is equipped with an operator operable switch means, ie the button 23. When the switch or button 23 is manually pressed by the operator it is possible for the service station to get data via the telephone line even if the printer is switched on, ie is functionally connected to the internal network. The switch means preferably includes some signal means, eg a lamp 24, indicating that communication is allowed. When the telephone communication has ended the switch is preferably automatically reset in a non communicating state. Thus, the customer will not be anxious that there is a data leakage because he forgot to reset the switch.

The above description is only one example of an embodiment of the invention as contained in the claims. It will be clear to the skilled person that a number of other embodiments are possible within the scope of the claims. For example, the equipment apparatus is not limited to a printer, but may also be a plotter, a copying apparatus having a printer option or any other equipment apparatus which is connected to a network.

Further, it is also possible to use the communication control apparatus independently of a printer, such a communication control apparatus comprises: internal communication means for communicating with an equipment apparatus connectable to a first network; external communication means for communicating with an external station through a second network and control means for allowing the external communication means to communicate with the external station only when the equipment apparatus is not functionally connected to the first network.

## Claims

1. Printing system comprising:
- a printing apparatus (2) connectable to a first network (1) for receiving print data therethrough; and
- a communication control apparatus (3), according to claim 13, connected to the printing apparatus (2), comprising.

2. Printing system comprising:
- a printing apparatus (2) connectable to a first network (1) for receiving printing data therethrough; and
- a communication control apparatus (3), according to claim 14, connected to the printing apparatus (2), comprising.

3. System according to claim 1 or 2, further **characterised in that** the control means (16, 20) senses whether the printing apparatus (2) is switched on or off, and wherein the control means (16, 20) allows communication with the external station (5) only when the printing apparatus (2) is switched off.

4. System according to claim 1 or 2, further **characterised in that** the control means (16, 20) is automatically activated to allow external communication when the printing apparatus (2) is switched off.

5. System according to claim 1 or 2, further **characterised in that** the control means (16, 20) senses whether the connection between the printing apparatus (2) and the first network (1) has been functionally broken, and wherein the control means (16, 20) allows communication with the external station (5) only when said connection has been functionally broken.

6. System according to claim 1 or 2, further **characterised in that** the control means (16, 20) is automatically activated to allow external communication when the connection between the printing apparatus (2) and the first network (1) has been functionally broken.

7. System according to any preceding claim, wherein the internal communication means (11, 18) comprises read-out means (13, 20) for reading operational related data from the printing apparatus (2) and storage means (14, 19) for storing the operation related data.

8. System according to claim 7 wherein the data is automatically read-out and stored at predetermined times.

9. System according to claims 7 or 8 wherein the internal communication means (11, 18) further comprises means (13, 20) for determining whether a data request has been received from the external station (5) within a predetermined time.

10. System according to claim 9 wherein the internal communication means (11, 18) further comprises at least one second storage means for storing the data which has not been transmitted to the external station (5) within the predetermined time.

11. System according to claims 2 to 10 wherein the switch means (23) further comprises signal means (24) for indicating to the operator that communication is allowed.

12. System according to any preceding claim wherein the printing apparatus (2) is a printer, a plotter or a copying machine having a printer option.

13. Printer communication control apparatus for use with a printing apparatus, comprising:
- internal communication means (11, 18) for communicating with a printing apparatus (2) connectable to a first network (1); and
- external communication means (12, 21) for communicating with an external station (5) through a second network (4);
**characterised in that** the communication control apparatus (3) further comprises
- control means (16, 20) for allowing the external communication means (12, 21) to communicate with the external station (5) only when it is determined by the control means that the printing apparatus (2) is not functionally connected to the first network (1).

14. Printer communication control apparatus for use with a printing apparatus, comprising:
- internal communication means (11, 18) for communicating with a printing apparatus (2) connectable to a first network (1); and
- external communication means (12, 21) for communicating with an external station (5) through a second network (4);
**characterised in that** the communication control apparatus (3) further comprises
- operator operable switch means (23) for outputting a signal indicating whether a priority status has been switched on;
- control means (16, 20) connected to the switch means (23) and receiving said signal; and
- said control means (16, 20) allowing communication with the external station (5) when the priority status has been switched on or in the case that the priority status is switched off only when it is determined by the control means that the printing apparatus (2) is not functionally connected to the first network (1).

15. Apparatus according to claim 13 or 14, further **characterised in that** the control means (16, 20) senses whether the printing apparatus (2) is switched on or off, and wherein the control means (16, 20) allows communication with the external station (5) only when the printing apparatus (2) is switched off.

16. Apparatus according to daim 13 or 14, further **characterised in that** the control means (16, 20) is automatically activated to allow external communication when the printing apparatus (2) is switched off.

17. Apparatus according to claim 13 or 14, further **characterised in that** the control means (16, 20) senses whether the connection between the printing apparatus (2) and the first network (1) has been functionally broken, and wherein the control means (16, 20) allows communication with the external station (5) only when said connection has been functionally broken.

18. Apparatus according to claim 13 or 14, further **characterised in that** the control means (16, 20) is automatically activated to allow external communication when the connection between the printing apparatus (2) and the first network (1) has been functionally broken.

19. Apparatus according to any preceding daim wherein the internal communication means (11, 18) comprises read-out means (13, 20) for reading operational related data from the printing apparatus (2) and storage means (14, 19) for storing the operation related data.

20. Apparatus according to claim 19 wherein the data is automatically read-out and stored at predetermined times.

21. Apparatus according to claim 19 or 20 further comprising means (13, 20) for determining whether a data request has been received from the external station (5) within a predetermined time.

22. Apparatus according to claim 21 further comprising at least one second storage means for storing the data which has not been transmitted to the external station (5) within the predetermined time.

23. Apparatus according to claims 14 to 22 wherein the switch means (23) further comprises signal means (24) for indicating to the operator that communication is allowed.

24. Apparatus according to any preceding claim wherein the printing apparatus (2) is a printer, a plotter or a copying machine having a printer option.

## Patentansprüche

1. Druckersystem mit:
- einem Druckgerät (2), das an ein erstes Netzwerk anschließbar ist, um Daten über dieses Netzwerk zu empfangen, und
- einem Kommunikations-Steuergerät (3) nach Anspruch 13, das mit dem Druckgerät (2) verbunden ist.

2. Druckersystem mit:
- einem Druckgerät (2), das an ein erstes Netzwerk (1) anschließbar ist, um Daten über dieses Netzwerk zu empfangen und
- einem Kommunikations-Steuergerät (3) nach Anspruch 14, das mit dem Druckgerät (2) verbunden ist.

3. System nach Anspruch 1 oder 2, **dadurch gekennzeichnet, daß** die Steuereinrichtung (16, 20) erfaßt, ob das Druckgerät (2) ein- oder ausgeschaltet ist, und daß die Steuereinrichtung (16, 20) eine Kommunikation mit der externen Station (5) nur dann erlaubt, wenn das Druckgerät (2) ausgeschaltet ist.

4. System nach Anspruch 1 oder 2, **dadurch gekennzeichnet, daß** die Steuereinrichtung (16, 20) automatisch aktiviert wird, um externe Kommunikation zu erlauben, wenn das Druckgerät (2) ausgeschaltet wird.

5. System nach Anspruch 1 oder 2, **dadurch gekennzeichnet, daß** die Steuereinrichtung (16, 20) erfaßt, ob die Verbindung zwischen dem Druckgerät (2) und dem ersten Netzwerk (1) funktionsmäßig unterbrochen worden ist, und daß die Steuereinrichtung (16, 20) die Kommunikation mit der externen Station (5) nur erlaubt, wenn die Verbindung funktionsmäßig unterbrochen ist.

6. System nach Anspruch 1 oder 2, **dadurch gekennzeichnet, daß** die Steuereinrichtung (16, 20) automatisch aktiviert wird, um externe Kommunikation zuzulassen, wenn die Verbindung zwischen dem Druckgerät (2) und dem ersten Netzwerk (1) funktionsmäßig unterbrochen worden ist.

7. System nach einem der vorstehenden Ansprüche, bei dem die interne Kommunikationseinrichtung (11, 18) eine Leseeinrichtung (13, 20) zum Lesen von betriebsbezogenen Daten von dem Druckgerät (2) und eine Speichereinrichtung (14, 19) zum Speichern der betriebsbezogenen Daten aufweist.

8. System nach Anspruch 7, bei dem die Daten zu vorbestimmten Zeiten automatisch gelesen und gespeichert werden.

9. System nach Anspruch 7 oder 8, bei dem die interne Kommunikationseinrichtung (11, 18) weiterhin eine Einrichtung (13, 20) aufweist, zur Entscheidung, ob innerhalb einer vorbestimmten Zeit eine Datenanfrage von der externen Station (5) empfangen worden ist.

10. System nach Anspruch 9, bei dem die interne Kommunikationseinrichtung (11, 18) weiterhin wenigstens eine zweite Speichereinrichtung aufweist, zum Speichern der Daten, die innerhalb der vorbestimmten Zeit nicht an die externe Station (5) übermittelt worden sind.

11. System nach Ansprüchen 2 bis 10, bei dem die Schalteinrichtung (23) weiterhin eine Signaleinrichtung (24) aufweist, um dem Benutzer anzuzeigen, daß die Kommunikation zugelassen ist.

12. System nach einem der vorstehenden Ansprüche, bei dem das Druckgerät (2) ein Drucker, ein Plotter oder ein Kopiergerät mit einer Druckoption ist.

13. Drucker-Kommunikations-Steuergerät zur Verwendung in einem Druckgerät, mit:
- einer internen Kommunikationseinrichtung (11, 18) zur Kommunikation mit einem Druckgerät (2), das an ein erstes Netzwerk anschließbar ist, und
- einer externen Kommunikationseinrichtung (12, 21) zur Kommunikation mit einer externen Station (5) über ein zweites Netzwerk (4),
**dadurch gekennzeichnet, daß** das Kommunikations-Steuergerät (3) weiterhin aufweist:
- eine Steuereinrichtung (16, 20), die es der externen Kommunikationseinrichtung (12, 21) nur dann erlaubt, mit der externen Station (5) zu kommunizieren, wenn die Steuereinrichtung feststellt, daß das Druckgerät (2) nicht funktionsmäßig mit dem ersten Netzwerk (1) verbunden ist.

14. Drucker-Kommunikations-Steuergerät zur Verwendung mit einem Druckgerät, mit:
- einer internen Kommunikationseinrichtung (18) zur Kommunikation mit einem Druckgerät (2), das an ein erstes Netzwerk (1) anschließbar ist, und
- einer externen Kommunikationseinrichtung (12, 21) zur Kommunikation mit einer externen Station (5) über ein zweites Netzwerk (4),
**dadurch gekennzeichnet, daß** das Kommunikations-Steuergerät (3) weiterhin aufweist:
- eine benutzerbetätigbare Schalteinrichtung (23) zur Ausgabe eines Signals, das anzeigt, ob ein Prioritätsstatus eingeschaltet worden ist,
- eine Steuereinrichtung (16, 20), die mit der Schalteinrichtung (23) verbunden ist und das genannte Signal empfängt, und
- wobei die Steuereinrichtung (16, 20) die Kommunikation mit der externen Station (5) erlaubt, wenn der Prioritätsstatus eingeschaltet ist oder, falls der Prioritätsstatus ausgeschaltet ist, nur wenn die Steuereinrichtung feststellt, daß das Druckgerät (2) nicht funktionsmäßig mit dem ersten Netzwerk (1) verbunden ist.

15. Gerät nach Anspruch 13 oder 14, **dadurch gekennzeichnet, daß** die Steuereinrichtung (16, 20) erfaßt, ob das Druckgerät (2) ein- oder ausgeschaltet ist, und daß die Steuereinrichtung (16, 20) die Kommunikation mit der externen Station (5) nur erlaubt, wenn das Druckgerät (2) ausgeschaltet ist.

16. Gerät nach Anspruch 13 oder 14, **dadurch gekennzeichnet, daß** die Steuereinrichtung (16, 20) automatisch aktiviert wird, um externe Kommunikation zuzulassen, wenn das Druckgerät (2) ausgeschaltet wird.

17. Gerät nach Anspruch 13 oder 14, **dadurch gekennzeichnet, daß** die Steuereinrichtung (16, 20) erfaßt, ob die Verbindung zwischen dem Druckgerät (2) und dem ersten Netzwerk (1) funktionsmäßig unterbrochen worden ist, und daß die Steuereinrichtung (16, 20) Kommunikation mit der externen Station (5) nur erlaubt, wenn die Verbindung funktionsmäßig unterbrochen ist.

18. Gerät nach Anspruch 13 oder 14, **dadurch gekennzeichnet, daß** die Steuereinrichtung (16, 20) automatisch aktiviert wird, um externe Kommunikation zuzulassen, wenn die Verbindung zwischen dem Druckgerät (2) und dem ersten Netzwerk (1) funktionsmäßig unterbrochen worden ist.

19. Gerät nach einem der vorstehenden Ansprüche, bei dem die interne Kommunikationseinrichtung (11, 18) eine Leseeinrichtung (13, 20) zum Lesen von betriebsbezogenen Daten aus dem Druckgerät (2) und eine Speichereinrichtung (14, 19) zum Speichern der betriebsbezogenen Daten aufweist.

20. Gerät nach Anspruch 19, bei dem die Daten zu vorbestimmten Zeiten automatisch gelesen und gespeichert werden.

21. Gerät nach Anspruch 19 oder 20, mit einer Einrichtung (13, 20) zur Entscheidung, ob eine Datenanfrage von der externen Station (5) innerhalb einer vorbestimmten Zeit empfangen worden ist.

22. Gerät nach Anspruch 21, mit wenigstens einer zweiten Speichereinrichtung zur Speicherung der Daten, die innerhalb der vorbestimmten Zeit nicht an die externe Station (5) übermittelt worden sind.

23. Gerät nach Ansprüchen 14 bis 22, bei dem die Schalteinrichtung (23) weiterhin eine Signaleinrichtung (24) aufweist, um dem Benutzer anzuzeigen, daß die Kommunikation erlaubt ist.

24. Gerät nach einem der vorstehenden Ansprüche, bei dem das Druckgerät (2) ein Drucker, ein Plotter oder ein Kopiergerät mit einer Druckoption ist.

## Revendications

1. Système d'impression comprenant :
- un appareil d'impression (2) qui peut être connecté à un premier réseau (1) pour recevoir des données d'impression via celui-ci; et
un appareil de commande de communication (3), selon la revendication 13, connecté à l'appareil d'impression (2).

2. Système d'impression comprenant :
- un appareil d'impression (2) qui peut être connecté à un premier réseau (1) pour recevoir des données d'impression via celui-ci; et
- un appareil de commande de communication (3), selon la revendication 14, connecté à l'appareil d'impression (2).

3. Système selon la revendication 1 ou 2, **caractérisé en outre en ce que** le moyen de commande (16, 20) détecte si l'appareil d'impression (2) est connecté ou déconnecté, et dans lequel le moyen de commande (16, 20) ne permet la communication avec le poste externe (5) que lorsque l'appareil d'impression (2) est déconnecté.

4. Système selon la revendication 1 ou 2, **caractérisé en outre en ce que** le moyen de commande (16, 20) est automatiquement activé pour permettre une communication externe lorsque l'appareil d'impression (2) est déconnecté.

5. Système selon la revendication 1 ou 2, **caractérisé en outre en ce que** le moyen de commande (16, 20) détecte si la connexion entre l'appareil d'impression (2) et le premier réseau (1) a été rompue fonctionnellement, et dans lequel le moyen de commande (16, 20) ne permet une communication avec le poste externe (5) que lorsque ladite connexion a été rompue fonctionnellement.

6. Système selon la revendication 1 ou 2, **caractérisé en outre en ce que** le moyen de commande (16, 20) est activé automatiquement pour permettre une communication externe lorsque la connexion entre l'appareil d'impression (2) et le premier réseau (1) a été fonctionnellement rompue.

7. Système selon l'une quelconque des revendications précédentes, dans lequel le moyen de communication interne (11, 18) comprend un moyen de lecture (13, 20) pour lire des données apparentées au fonctionnement dans l'appareil d'impression (2) et un moyen de stockage (14, 19) pour stocker les données apparentées au fonctionnement.

8. Système selon la revendication 7, dans lequel les données sont automatiquement lues et stockées à des périodes prédéterminées.

9. Système selon la revendication 7 ou 8, dans lequel le moyen de communication interne (11, 18) comprend par ailleurs un moyen (13, 20) pour déterminer si une demande de données a été reçue du poste externe (5) dans une période prédéterminée.

10. Système selon la revendication 9, dans lequel le moyen de communication interne (11, 18) comprend en outre au moins un second moyen de stockage pour stocker les données qui n'ont pas été transmises au poste externe (5) dans la période prédéterminée.

11. Système selon les revendications 2 à 10, dans lequel le moyen de commutation (23) comprend en outre un moyen de signalisation (24) pour indiquer à l'opérateur que la communication est autorisée.

12. Système selon l'une quelconque des revendications précédentes, dans lequel l'appareil d'impression (2) est une imprimante, une table traçante ou une machine de duplication ayant une option d'imprimante.

13. Appareil de commande de communication avec une imprimante susceptible d'être utilisé avec un appareil d'impression et comprenant:
- un moyen de communication interne (11, 18) pour communiquer avec un appareil d'impression (2) qui peut être connecté à un premier réseau (1); et
- un moyen de communication externe (12, 21) pour communiquer avec un poste externe (5) via un second réseau (4);
**caractérisé en ce que** l'appareil de commande de communication (3) comprend par ailleurs :
- un moyen de commande (16, 20) pour permettre au moyen de communication externe (12, 21) de ne communiquer avec le poste externe (5) que lorsqu'il est déterminé par le moyen de commande que l'appareil d'impression (2) n'est pas fonctionnellement connecté au premier réseau (1).

14. Appareil de commande de communication avec une imprimante susceptible d'être utilisé avec un appareil d'impression, comprenant :
- un moyen de communication interne (11, 18) pour communiquer avec un appareil d'impression (2) qui peut être connecté à un premier réseau (1); et
- un moyen de communication externe (12, 21) pour communiquer avec un poste externe (5) via un second réseau (4);
**caractérisé en ce que** l'appareil de commande de communication (3) comprend en outre :
- un moyen de commutation (23) qui peut être actionné par un opérateur pour délivrer un signal indiquant si un état de priorité a été connecté;
- un moyen de commande (16, 20) connecté au moyen de commutation (23) et recevant ledit signal; et
- ledit moyen de commande (16, 20) permettant la communication avec le poste externe (5) lorsque l'état de priorité a été connecté ou, dans le cas où l'état de priorité est déconnecté, uniquement lorsqu'il est déterminé par le moyen de commande que l'appareil d'impression (2) n'est pas fonctionnellement connecté au premier réseau (1).

15. Appareil selon la revendication 13 ou 14, **caractérisé en outre en ce que** le moyen de commande (16, 20) détecte si l'appareil d'impression (2) est connecté ou déconnecté et dans lequel le moyen de commande (16, 20) ne permet la communication avec le poste externe (5) que lorsque l'appareil d'impression (2) est déconnecté.

16. Appareil selon la revendication 13 ou 14, **caractérisé en outre en ce que** le moyen de commande (16, 20) est automatiquement activé pour permettre une communication externe lorsque l'appareil d'impression (2) est déconnecté.

17. Appareil selon la revendication 13 ou 14, **caractérisé par** ailleurs en ce que le moyen de commande (16, 20) détecte si la connexion entre l'appareil d'impression (2) et le premier réseau (1) a été rompue fonctionnellement, et dans lequel le moyen de commande (16, 20) ne permet la communication avec le poste externe (5) que lorsque ladite connexion a été rompue fonctionnellement.

18. Appareil selon la revendication 13 ou 14, **caractérisé en outre en ce que** le moyen de commande (16, 20) est automatiquement activé pour permettre une communication externe lorsque la connexion entre l'appareil d'impression (2) et le premier réseau (1) a été fonctionnellement rompue.

19. Appareil selon l'une quelconque des revendications précédentes, dans lequel le moyen de communication interne (11, 18) comprend un moyen de lecture (13, 20) pour lire des données apparentées au fonctionnement dans l'appareil d'impression (2) et un moyen de stockage (14, 19) pour stocker les données apparentées au fonctionnement.

20. Appareil selon la revendication 19, dans lequel les données sont automatiquement lues et stockées à des périodes prédéterminées.

21. Appareil selon la revendication 19 ou 20, comprenant en outre un moyen (13, 20) pour déterminer si une demande de données a été reçue du poste externe (5) dans une période prédéterminée.

22. Appareil selon la revendication 21, comprenant par ailleurs au moins un second moyen de stockage pour stocker les données qui n'ont pas été transmises au poste externe (5) dans la période prédéterminée.

23. Appareil selon les revendications 14 à 22, dans lequel le moyen de commutation (23) comprend en outre un moyen de signalisation (24) pour indiquer à l'opérateur qu'une communication est autorisée.

24. Appareil selon l'une quelconque des revendications précédentes, dans lequel l'appareil d'impression (2) est une imprimante, une table traçante ou une machine de duplication ayant une option d'imprimante.
